# EUROPÄISCHE PATENTSCHRIFT

(11) **EP 2 542 374 B1**
(45) Veröffentlichungstag und Bekanntmachung des Hinweises auf die Patenterteilung: **08.07.2015**
(21) Anmeldenummer: 11703389.4
(22) Anmeldetag: 02.02.2011
(51) Int. Cl.: B23K 1/005, B23K 26/32, B23K 26/20

(54) **VERFAHREN ZUR ERZEUGUNG EINER KORROSIONSBESTÄNDIGEN LASERSCHWEISSVERBINDUNG ZWISCHEN ZWEI BAUTEILEN UND ANORDNUNG AUS ZWEI MITEINANDER VERSCHWEISSTEN BAUTEILEN**
METHOD FOR CREATING A CORROSION-RESISTANT LASER WELD JOINT BETWEEN TWO COMPONENTS AND ASSEMBLY CONSISTING OF TWO COMPONENTS WELDED TOGETHER
PROCÉDÉ POUR PRODUIRE UN ASSEMBLAGE PAR SOUDAGE AU LASER RÉSISTANT À LA CORROSION ENTRE DEUX ÉLÉMENTS ET AGENCEMENT CONSTITUÉ DE DEUX ÉLÉMENTS SOUDÉS ENSEMBLE

(30) Priorität: 05.03.2010 DE 102010010415
(43) Veröffentlichungstag der Anmeldung: 09.01.2013
(73) Patentinhaber: Bayerische Motoren Werke Aktiengesellschaft, 80809 München (DE)
(72) Erfinder: GOESMANN, Hubertus, 89564 Auernheim (DE); LANDUA, Steffen, Dr., 38524 Sassenburg (DE); PETZ, Philipp, 81379 München (DE)
(86) Internationale Anmeldenummer: PCT/EP2011/000477
(87) Internationale Veröffentlichungsnummer: WO 2011/107194

(56) Entgegenhaltungen:
- EP-A1- 1 440 759
- EP-A2- 1 762 376
- DE-A1- 4 241 433

## Beschreibung

Die Erfindung betrifft ein Verfahren zur Erzeugung einer korrosionsbeständigen Laserschweißverbindung zwischen zwei Bauteilen. Die Erfindung betrifft ferner eine Anordnung aus zwei mittels einer Laserschweißverbindung miteinander verbundenen Bauteilen.

Mittels Laserschweißverbindungen können zwei Bauteile dauerhaft und zuverlässig miteinander verbunden werden. Abhängig von den Materialien der miteinander verschweißten Bauteile, deren Einsatzgebiet und Nutzung kann im Bereich der Laserschweißverbindung Korrosion entstehen, welche zu einer schleichenden Verschlechterung oder sogar Zerstörung der Laserschweißverbindung führt. Für den Fall, dass die Laserschweißverbindung eine elektrische und mechanische Verbindung darstellt, führt dies möglicherweise zum Ausfall der elektrischen Anordnung.

Im Umfeld von Kraftfahrzeugen werden Speichermodule zur elektrischen Versorgung und/oder zum Antrieb des Kraftfahrzeugs eingesetzt. Ein solches Speichermodul besteht aus einer Mehrzahl an Speicherzellen und/oder Doppelschichtkondensatoren, welche über Ihre Anschlussterminals parallel und/oder elektrisch zu dem Speichermodul miteinander verschaltet sind. Die Anschlussterminals der Speicherzellen des Speichermoduls bestehen aus einem Stahl. Die elektrische und mechanische Verbindung zwischen zwei Anschlussterminals unterschiedlicher Polarität zweier benachbarter Speicherzellen wird dabei unter Verwendung sog. Zellverbinder vorgenommen. Die Zellverbinder sind im einfachsten Fall Stücke oder Plättchen aus Aluminium oder Kupfer, die über eine metallische Zwischenlage aus Stahl oder einer Nickellegierung welche z.B. mittels Ultraschallschweiβen am Zellverbinder verbunden wird, mit dem Anschlussterminal aus Stahl laserverschweißt werden.

Eine auf dem aus nicht korrosionsbeständigem Stahl bestehenden Anschlussterminal aufgebrachte korrosionshemmende Schicht (z.B. Nickel) stellt einen Oxidationsschutz dar, der durch die Laserschweißverbindung zerstört wird. Nach Durchführung der Laserschweißverbindung ist ein nachträglicher Schutz nicht mehr möglich. Da insbesondere im oben geschilderten Anwendungsfall das Speichermodul den unterschiedlichsten Umgebungsbedingungen ausgesetzt ist, kann es bei entsprechender Luftfeuchtigkeit und/oder salzhaltiger Luft zur Korrosion kommen, welche zur Verschlechterung oder sogar Zerstörung der Laserschweißverbindung führt. Dies kann zum Ausfall des gesamten Speichermoduls führen, was mit den wirtschaftlichen Anforderungen an ein Kraftfahrzeug nicht vereinbar ist.

Aus dem Stand der Technik sind verschiedene Verfahren zum Erzeugen einer Laserschweißverbindung bzw. Einsatzgebiete des Laserschweißens bekannt. Die DE 42 41 433 A1 betrifft eine Dauerelektrodenvorrichtung für die Kupferaffination mit einem aus einem Kupfer- oder Aluminiumprofil gebildeten Oberhaupt und einer an dem Oberhaupt sitzenden Elektrodenplatte aus austhenitischem Stahl, Titan, Nickel oder Nickellegierungen. In einer Ausführungsform ist die Elektrodenplatte mit einer Platte aus austhenitischem Stahl, Titan, Nickel oder Nickellegierungen laserverschweißt, wobei die Platte an einer Seite des Oberhaupts fest mit diesem verbunden ist. Die EP 1 440 759 A1 beschreibt ein Verfahren zur Herstellung eines Wärmetauschers mit einem metallischen Rohr mit einer aluminiumbeschichteten Oberfläche und mit auf der Oberfläche angeordneten die Wärmeübertagungsfläche vergrößernden Rippen aus Aluminium, wobei unter anderem vorgeschlagen ist, die Rippen mittels Laserpunktschweißen auf dem Rohr zu befestigen. In der EP 1 762 376 A2 ist ein Verfahren zur Herstellung eines Werkstoffverbunds beschrieben, der einen Teil aus Stahl oder einem Titan-Basis-Werkstoff und einen Teil aus einem Kupfer- oder Aluminium-Basis-Werkstoff umfasst, wobei die beiden Teile über ein Zwischenstück miteinander verbunden sind, wobei das Zwischenstück aus einem Bereich aus Stahl oder einem Titan-Basis-Werkstoff und einem Bereich aus einem Kupfer- oder Aluminium-Basis-Werkstoff besteht, und die Verbindung beispielsweise mittels Laserschweißen realisiert ist. Die vorgenannten Verfahren sind mit Blick auf die bei Kraftfahrzeugen vorherrschenden Bedingungen, insbesondere mit Blick auf die Korrosionssituation allerdings nur bedingt anwendbar.

Es ist daher Aufgabe der vorliegenden Erfindung, ein Verfahren zur Erzeugung einer Laserschweißverbindung anzugeben, welche bezüglich mechanischer Festigkeit und Korrosion eine dauerhafte Stabilität aufweist. Ferner soll eine Anordnung aus zwei mittels Laser verschweißten Bauteilen angegeben werden, welche eine über die Lebenszeit dauerhafte Zuverlässigkeit hinsichtlich der genannten Anforderungen aufweist.

Diese Aufgaben werden gelöst durch ein Verfahren gemäß den Merkmalen des Anspruches 1 und eine Anordnung gemäß den Merkmalen des Anspruches 15. Vorteilhafte Ausgestaltungen ergeben sich jeweils aus den abhängigen Patentansprüchen.

Die Erfindung schafft ein Verfahren zur Erzeugung einer korrosionsbeständigen Laserschweißverbindung zwischen zwei Bauteilen. Das Verfahren umfasst folgende Schritte: Bereitstellen eines ersten Bauteils, das im Bereich der herzustellenden Verbindung eine Anschlussfläche aus einem ersten, insbesondere korrosionsunbeständigen, Metall umfasst, wobei zumindest die Anschlussfläche des ersten Bauteils mit einer insbesondere korrosionshemmenden Metallschicht aus einem zweiten Metall versehen ist. Bereitstellen eines zweiten Bauteils mit einem Körper aus einem dritten Metall, auf den im Bereich der herzustellenden Verbindung eine Schweißhilfe aus einem vierten Metall mit einer Anschlussfläche aufgebracht ist. Vorsehen einer korrosionsbeständigen Lotschicht auf der Anschlussfläche des ersten und/oder zweiten Bauteils, das eine Schmelztemperatur aufweist, die geringer ist als die in einer Schweißzone der miteinander zu verbindenden Bauteile auftretende Temperatur. Flächiges Inkontaktbringen des ersten und zweiten Bauteils im Bereich deren Anschlussflächen. Durchführen der Laserschweißverbindung unter Aufschmelzen des Lots der Lotschicht, das durch das Schweißen entstehende Spalten zwischen dem ersten Metall, dem vierten Metall und der entstandenen Schweißzone ausfüllt.

Durch die auf der Anschlussfläche des ersten und/oder zweiten Bauteils vorgesehene Lotschicht kann dauerhaft vermieden werden, dass ein Kontakt des insbesondere nicht korrosionsgeschützten ersten Materials des ersten Bauteils mit der Umgebung stattfindet, wodurch ein Oxidationsprozess vermieden werden kann. Hierdurch bedingt wird die dauerhafte Beständigkeit der Laserschweißverbindung zwischen den beiden Bauteilen sichergestellt, wodurch sich eine erhöhte Lebensdauer der Verbindung ergibt.

Als erstes Material des ersten Bauteils wird bei dem erfindungsgemäßen Verfahren Stahl oder eine Eisenlegierung verwendet. Bei dem ersten Bauteil kann es sich beispielsweise um eine Speicherzelle für ein Speichermodul, insbesondere eines Kraftfahrzeugs, handeln, dessen Anschlussfläche durch ein Anschlussterminal aus Stahl oder einer Eisenlegierung gebildet ist. Als zweites Metall wird auf der Anschlussfläche des ersten Bauteils Nickel oder eine Nickellegierung verwendet, die als Oxidationsschutz für die Anschlussfläche des ersten Bauteils dient. Als drittes Metall des Körpers des zweiten Bauteils wird Aluminium, eine Aluminiumlegierung oder Kupfer verwendet. Bei dem zweiten Bauteil kann es sich um einen sog. Zellverbinder handeln, über den zwei Anschlussterminals zweier Speicherzellen (die die ersten Bauteile darstellen) elektrisch verbunden werden. Auf der für die Verbindung mit dem ersten Bauteil vorgesehene Seite des Körpers des zweiten Bauteils wird eine Schweißhilfe aus dem vierten Material, z.B. mittels Ultraschallschweißen, aufgebracht, welche über deren Anschlussfläche eine Laserschweißverbindung mit dem ersten Material des ersten Bauteils ermöglicht. Als viertes Material der Schweißhilfe des zweiten Bauteils wird Stahl oder eine Nickellegierung verwendet.

In der Schmelzschweißzone bildet sich ein Gemisch aus dem ersten, zweiten und dem vierten Material, wobei typischerweise Temperaturen von 1200 °C bis 1400 °C erreicht werden. Der Schmelzpunkt des einzubringenden Lotes muss daher unterhalb von 1200 °C liegen, so dass sichergestellt ist, dass durch das Schweißen entstehende Spalte zwischen dem ersten Metall und der Schweißhilfe durch das Lot ausgefüllt werden. Zweckmäßigerweise wird die Lotschicht aus einem Lot gebildet, das einen Schmelzpunkt zwischen ca. 210 °C und 230 °C aufweist. Beispielsweise kann als Lot ein zinnhaltiges Lot verwendet werden, das in dem genannten Temperaturbereich schmilzt. Alternativ kann die Lotschicht aus einem Lot gebildet werden, das einen Schmelzpunkt zwischen ca. 800 °C bis 900 °C aufweist. Hier kommt insbesondere als Lot ein silberhaltiges Lot oder ein Lot auf Aluminiumbasis in Betracht. Um die Gefahr zu reduzieren, dass das Lot verbrennt. kann die Lotschicht auch aus einem Lot mit einer Arbeitstemperatur um 1000 °C dargestellt werden. Für diese Arbeitstemperatur bieten sich Lote auf Nickel- oder Kupfer-Basis an.

In allen Fällen ist sichergestellt, dass das Lot der Lotschicht eine Schmelztemperatur aufweist, die geringer ist als die in der Schweißzone der miteinander zu verschweißenden Bauteile auftretende Temperatur.

Das Lot der Lotschicht kann wahlweise durch Pinseln, Sprühen oder Drucken auf die Anschlussfläche des ersten und/oder zweiten Bauteils aufgebracht werden. Es hat sich als zweckmäßig herausgestellt, wenn die Lotschicht in einer Dicke von weniger als 10 µm auf die Anschlussfläche des ersten und/oder zweiten Bauteils aufgebracht wird.

Insbesondere kann auch vorgesehen sein, dass die Lotschicht eine Schichtfolge aus einer Mehrzahl an Lotschichten umfasst, die aufeinander folgend auf die Anschlussfläche des ersten und/oder zweiten Bauteils aufgebracht werden. Die Schichten können dabei unterschiedliche oder gleiche Schmelzpunkte aufweisen.

Die Erfindung schafft ferner eine Anordnung, die durch das oben beschriebene Verfahren hergestellt ist. Diese Anordnung besteht aus einem ersten und einem zweiten mittels einer Laserschweißverbindung miteinander verbundener Bauteile, wobei das erste Bauteil im Bereich der herzustellenden Verbindung eine Anschlussfläche aus einem ersten Metall umfasst, wobei zumindest die Anschlussfläche des ersten Bauteils mit einer Metallschicht aus einem zweiten Metall versehen ist, wobei das zweite Bauteil einen Körper aus einem dritten Metall aufweist, auf den im Bereich der herzustellenden Verbindung eine Schweißhilfe aus einem vierten Metall mit einer Anschlussfläche aufgebracht ist, wobei die Laserschweißverbindung durch das oben beschriebene Verfahren erzeugt ist. Insbesondere ist das erste Bauteil eine Speicherzelle für ein Speichermodul, insbesondere eines Kraftfahrzeugs, dessen Anschlussfläche durch ein Anschlussterminal aus Stahl oder einer Eisenlegierung gegeben ist. Das zweite Bauteil ist ein Zellverbinder aus Aluminium, einer Aluminiumlegierung oder aus Kupfer mit einer Schweißhilfe aus Stahl oder Nickel, über den die Anschlussterminals zweier Speicherzellen unterschiedlicher Polarität elektrisch miteinander verbunden sind. Die erfindungsgemäße Anordnung zeichnet sich weiterhin dadurch aus, dass diese in der Schweißzone Elemente eines Lotes umfasst.

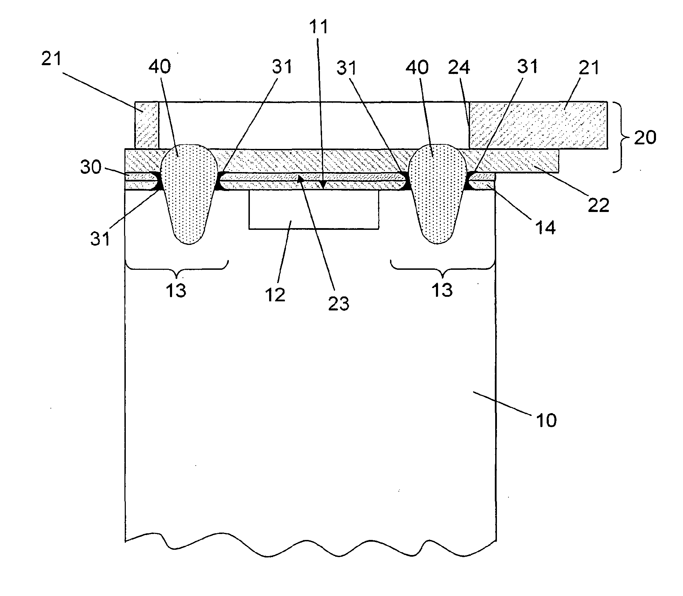

Die Erfindung wird nachfolgend näher anhand eines Ausführungsbeispiels in der Zeichnung erläutert.

Die einzige Figur zeigt eine zwischen zwei Bauteilen 10, 20 hergestellte Laserschweißverbindung.

Mit dem Bezugszeichen 10 ist ein erstes Bauteil, beispielsweise eine Speicherzelle für ein Speichermodul, insbesondere eines Kraftfahrzeugs, dargestellt. Die Speicherzelle 10, die in der Figur in einem Längsschnitt dargestellt ist, weist einen zylindrischen, beispielsweise kreisrunden oder prismatischen, Querschnitt auf, wobei an den stirnseitigen Enden Anschlussterminals ausgebildet sind. Im Ausführungsbeispiel ist ein Anschlussterminal dargestellt, welches eine Anschlussfläche 11 ausbildet. Die Anschlussfläche 11 umfasst einen zentral angeordneten Bereich 12, der aufgrund des internen Aufbaus der Speicherzelle 10 nicht mit einem zweiten Bauteil 20 verschweißt werden darf. Der zentrale Bereich 12 ist, wie ein ihn umgebender Bereich 13, aus Stahl oder einer Eisenlegierung gebildet. Der ringförmige Bereich 13 ermöglicht die Verschweißung mit dem zweiten Bauteil 20. Auf der Anschlussfläche 11, welche wie beschrieben vollständig aus Stahl oder einer Eisenlegierung gebildet ist, ist eine korrosionshemmende Metallschicht 14 z.B. aus Nickel angeordnet. Die Metallschicht 14 aus Nickel weist eine Höhe von ca. 10 µm auf und wird zum Schutz der Anschlussfläche 11 aus Stahl vor Oxidation aufgebracht.

Die Nickel-Schicht 14 kann entgegen der zeichnerischen Darstellung der Figur nicht nur auf den stirnseitigen Anschlussterminals bzw. Anschlussflächen 11 der Speicherzelle 10, sondern auch zumindest teilweise auf der Mantelfläche der Speicherzelle 10 aufgebracht sein.

Das zweite Bauteil 20 stellt z.B. einen Zellverbinder aus Aluminium, einer Aluminiumlegierung oder aus Kupfer dar. Der im Querschnitt dargestellte Zellverbinder weist beispielsweise einen rechteckigen Aluminiumkörper 21 auf, der am Ende im Bereich einer, z.B. an den Querschnitt der Speicherzelle 10 angepassten, Öffnung 24 mit einer z.B. per Ultraschall verschweißten Schweißhilfe 22 aus Stahl oder Nickel versehen ist, deren Anschlussfläche (23) eine Laserschweißverbindung mit dem ersten Bauteil 10 über dessen Anschlussfläche 11 zulässt ohne durch den Aluminiumkörper zu schweißen. Die Schweißhilfe 22 weist dabei eine Breite auf, die mindestens der Breite der Anschlussfläche 11 der Speicherzelle 10 entspricht.

Zur Herstellung der Laserschweißverbindung zwischen der Speicherzelle 10 und dem Zellverbinder 20 werden die beiden Bauteile 10, 20 flächig miteinander in Kontakt gebracht. Mit einem Laser wird von Seiten des Zellverbinders 20 her durch die Öffnung 24 des Aluminiumkörpers 21 hindurch eine Laserschweißverbindung in dem (ringförmigen oder gradlinigen) Bereich 13 der Speicherzelle 10 durchgeführt. Bei der Durchführung des Laserschweißvorganges wird die zum Schutz vor Oxidation auf der Anschlussfläche 11 aufgebrachte Nickel-Schicht 14 zerstört. Der nicht korrosionsbeständige Stahl des Anschlussterminals bzw. der Anschlussfläche 11 erhält hierbei Kontakt mit der Umgebung, wodurch über die Laufzeit der Speicherzelle Korrosion entstehen kann. Ein nachträglicher Schutz nach Durchführung der Laserschweißverbindung ist dabei nicht möglich.

Bei der Laserschweißverbindung schmilzt die mit dem Bezugszeichen 40 gekennzeichnete Schweißzone der Anordnung auf, wobei sich ein Gemisch aus Nickel und Eisen bildet. Während des Schweißvorganges entstehen dabei in der Schweißzone 40 Temperaturen zwischen 1200 °C und 1400 °C. In die bereits erwähnte Spalte, welche sich im Randbereich der Schweißzone 40 ausbildet, kann dabei Feuchtigkeit eindringen und die unerwünschte Korrosion verursachen.

Zur Vermeidung der Korrosion wird erfindungsgemäß deshalb entweder auf der Nickel-Schicht 14 der Speicherzelle 10 oder auf der Anschlussfläche 23 der Schweißhilfe 22 des Zellverbinders 20 oder auf beiden Oberflächen 14, 23 eine korrosionsbeständige Lotschicht 30 aufgebracht. Die Lotschicht 30 wird aus einem Lot gebildet, das eine Schmelztemperatur aufweist, die geringer ist, als die in der Schweißzone 40 auftretende Temperatur von 1200 °C bis 1400 °C. Beispielsweise kann ein zinnhaltiges Lot verwendet werden, das in einem Temperaturbereich zwischen 210 °C und 230 °C aufschmilzt. Alternativ kann ein silberhaltiges Lot oder eines auf Aluminiumbasis verwendet werden, das bei ca. 800 °C bis 900 °C aufschmilzt. Um die Gefahr zu reduzieren, dass das Lot beim Schweißvorgang verbrennt, kann die Lotschicht auch aus einem Lot mit einer Arbeitstemperatur um 1000 °C dargestellt werden. Für diese Arbeitstemperatur bieten sich Lote auf Nickel- oder Kupfer-Basis an.

Die Lotschicht 30, die eine Dicke von vorzugsweise weniger als 10 µm aufweist, kann durch Pinseln, Sprühen oder Drucken auf eine der Anschlussflächen 11, 23 der Speicherzelle 10 oder des Zellverbinders 20 aufgebracht werden. Wahlweise kann die Lotschicht 30 als eine einzige Schicht oder als eine Schichtfolge einer Mehrzahl an Lotschichten aufgebracht werden. Bei einer Mehrzahl von Lotschichten kann jede der Lotschichten aus unterschiedlichen Loten mit unterschiedlichen Schmeiztempetaturen gebildet sein.

Bei der Durchführung der Laserschweißverbindung schmilzt das Lot der Lotschicht 30 auf, so dass diese durch das Schweißen entstehende Spalte zwischen der Schweißzone 40 und dem Stahl der Speicherzelle 10 auffüllt. Dies ist in der Figur mit dem Bezugszeichen 31 gekennzeichnet, wobei sich das Lot durch das Aufschmelzen als Meniskus an den Rand der mit Lot durchdrungenen Schweißzone und parallel zu den Fügeflächen der Bauteile 10 und 20 anlegt. Dadurch, dass das Lot der Lotschicht 30 durch die eingebrachte Wärme während des Laserschweißens aufschmilzt und den Spalt zwischen den Bauteilen ausfüllt, wird die Schweißnaht 40 sowohl auf der Innen- als auch auf der Außenseite der Verbindung von der Umgebung abgekapselt, so dass es trotz Zerstörung der Nickel-Schicht 14 zu keiner Oxidation des Stahls des Anschlussterminals kommt. Im Ergebnis kann hierdurch eine verbesserte Schweißverbindung und eine damit einhergehende erhöhte Lebensdauer der Anordnung aus den zwei Bauteilen erzielt werden.

Durch die Verwendung eines Lotes, welches durch die Schweißwärme der Laserschweiβung aufschmilzt, ist kein weiterer Prozessschritt in der Fertigung nötigt um die Schweißzone auf beiden Seiten dauerhaft gegen Korrosion zu schützen. Die verbesserte Laserschweißverbindung wird allein durch das vor dem Durchführen der Laserschweißverbindung aufgebrachte Lot auf die miteinander zu verbindenden Anschlussflächen hergestellt.

### Bezugszeichenliste

- 10: erstes Bauteil
- 11: Anschlussfläche
- 12: zentral angeordneter Bereich
- 13: umgebender Bereich des zentral angeordneten Bereichs
- 14: Metallschicht
- 20: zweites Bauteil
- 21: Aluminiumkörper
- 22: Schweißhilfe
- 23: Anschlussfläche
- 24: Öffnung
- 30: Lotschicht
- 31: aufgeschmolzenes Lot
- 40: Schweißzone

## Patentansprüche

1. Verfahren zur Erzeugung einer Laserschweißverbindung zwischen zwei Bauteilen (10, 20), mit den Schritten:
- Bereitstellen eines ersten Bauteils (10), das im Bereich der herzustellenden Verbindung eine Anschlussfläche (11) aus einem ersten Metall umfasst, wobei zumindest die Anschlussfläche (11) des ersten Bauteils (10) mit einer Metallschicht (14) aus einem zweiten Metall versehen ist,
- Bereitstellen eines zweiten Bauteils (20) mit einem Körper (21) aus einem dritten Metall, auf den im Bereich der herzustellenden Verbindung eine Schweißhilfe (22) aus einem vierten Metall mit einer Anschlussfläche (23) aufgebracht ist,
- Vorsehen einer korrosionsbeständigen Lotschicht (30) auf der Anschlussfläche des ersten und/oder zweiten Bauteils (10, 20), welches Lot eine Schmelztemperatur aufweist, die geringer ist als die in einer Schweißzone der miteinander zu verschweißenden Bauteile (10, 20) auftretende Temperatur,
- Flächiges Inkontaktbringen des ersten und zweiten Bauteils (10, 20) im Bereich der Anschlussflächen, und
- Durchführen der Laserschweißverbindung unter Aufschmelzen des Lots der Lotschicht (30), das durch das Schweißen entstehende Spalte zwischen dem ersten und vierten Metall und der Schweißzone ausfüllt.

2. Verfahren nach Anspruch 1, **dadurch gekennzeichnet, dass** als erstes Metall des ersten Bauteils (10) Stahl oder eine Eisenlegierung verwendet wird.

3. Verfahren nach Anspruch 1 oder 2, **dadurch gekennzeichnet, dass** als zweites Metall auf der Anschlussfläche (11) des ersten Bauteils (10) Nickel oder eine Nickellegierung verwendet werden.

4. Verfahren nach einem der vorhergehenden Ansprüche, **dadurch gekennzeichnet, dass** als drittes Metall des zweiten Bauteils (20) Aluminium , eine Aluminiumlegierung oder Kupfer verwendet wird.

5. Verfahren nach einem der vorhergehenden Ansprüche, **dadurch gekennzeichnet, dass** als viertes Metall der Schweißhilfe (22) des zweiten Bauteils (20) Stahl oder eine Nickellegierung verwendet wird.

6. Verfahren nach einem der Ansprüche 1 bis 5, **dadurch gekennzeichnet, dass** die Lotschicht (30) aus einem Lot gebildet wird, das einen Schmelzpunkt zwischen ca. 210° bis 230° C aufweist.

7. Verfahren nach Anspruch 6, **dadurch gekennzeichnet, dass** als Lot ein zinnhaltiges Lot verwendet wird.

8. Verfahren nach einem der Ansprüche 1 bis 5, **dadurch gekennzeichnet, dass** die Lotschicht (30) aus einem Lot gebildet wird, das einen Schmelzpunkt zwischen ca. 800° bis 900°C aufweist.

9. Verfahren nach Anspruch 8, **dadurch gekennzeichnet, dass** als Lot ein silberhaltiges Lot oder ein Lot auf Aluminiumbasis verwendet wird.

10. Verfahren nach einem der Ansprüche 1 bis 5, **dadurch gekennzeichnet, dass** die Lotschicht (30) aus einem Lot gebildet wird, das einen Schmelzpunkt bei ca. 1000°C aufweist.

11. Verfahren nach Anspruch 10, **dadurch gekennzeichnet, dass** als Lot ein Lot auf Basis von Kupfer oder Nickel verwendet wird.

12. Verfahren nach einem der vorherigen Ansprüche, **dadurch gekennzeichnet, dass** das Lot durch Pinseln, Sprühen oder Drucken auf die Anschlussfläche (11, 23) des ersten und/oder zweiten Bauteils (10, 20) aufgebracht wird.

13. Verfahren nach einem der vorhergehenden Ansprüche, **dadurch gekennzeichnet, dass** die Lotschicht (30) in einer Dicke von weniger als 10µm auf die Anschlussfläche (11, 23) des ersten und/oder zweiten Bauteils (10, 20) aufgebracht wird.

14. Verfahren nach einem der vorhergehenden Ansprüche, **dadurch gekennzeichnet, dass** die Lotschicht (30) eine Schichtfolge aus einer Mehrzahl an Lotschichten umfasst, die aufeinander folgend auf die Anschlussfläche (11, 23) des ersten und/oder zweiten Bauteils (10, 20) aufgebracht werden.

15. Anordnung bestehend aus einem ersten und einem zweiten mittels einer Laserschweißverbindung miteinander verbundener Bauteile (10, 20), wobei das erste Bauteil (10) im Bereich der herzustellenden Verbindung eine Anschlussfläche (11) aus einem ersten Metall umfasst, wobei zumindest die Anschlussfläche (11) des ersten Bauteils (10) mit einer Metallschicht (14) aus einem zweiten Metall versehen ist, wobei das zweite Bauteil (20) einen Körper (21) aus einem dritten Metall aufweist, auf den im Bereich der herzustellenden Verbindung eine Schweißhilfe (22) aus einem vierten Metall mit einer Anschlussfläche (23) aufgebracht ist, wobei eine korrosionsbeständige Lotschicht auf einer der Anschlussflächen vorgesehen ist, wobei die Laserschweißverbindung durch ein Verfahren nach einem der vorhergehenden Ansprüche derart erzeugt ist, dass unter Aufschmelzen des Lots der Lotschicht eine durch das Schweißen entstehende Spalte zwischen dem ersten und dem vierten Metall und der Schweißzone ausgefüllt ist.

16. Anordnung nach Anspruch 15, **dadurch gekennzeichnet, dass** das erste Bauteil (10) eine Speicherzelle für ein Speichermodul, insbesondere eines Kraftfahrzeugs, ist, dessen Anschlussfläche (11) durch ein Anschlussterminal aus Stahl oder einer Eisenlegierung gebildet ist und das zweite Bauteil (20) ein Zellverbinder aus Aluminium, einer Aluminiumlegierung oder Kupfer mit einer Schweißhilfe (22) aus Stahl oder einer Nickellegierung ist, über das die Anschlussterminals zweier Speicherzellen unterschiedlicher Polarität elektrisch und mechanisch miteinander verbunden sind.

17. Anordnung nach Anspruch 15 oder 16, **dadurch gekennzeichnet, dass** diese in der Schweißzone Elemente eines Lotes umfasst.

## Claims

1. A method for producing a laser weld connection between two components (10, 20), comprising the steps:
- providing a first component (10), which comprises a connection face (11) made of a first metal in the region of the connection to be produced, wherein at least the connection face (11) of the first component (10) is provided with a metal layer (14) made of a second metal,
- providing a second component (20) with a body (21) made of a third metal, on which a welding aid (22) made of a fourth metal with a connection face (23) is applied in the region of the connection to be produced,
- providing a corrosion-resistant solder layer (30) on the connection face of the first and/or second component (10, 20), which solder has a melt temperature, which is less than the temperature occurring in a weld zone of the components (10, 20) to be welded to one another,
- bringing the first and second component (10, 20) into planar contact with one another in the region of the connection faces, and
- carrying out the laser weld connection by melting the solder of the solder layer (30), which fills gaps formed by the welding operation between the first and fourth metals and the welding zone.

2. A method according to claim 1, **characterised in that** steel or an iron alloy is used as the first metal of the first component (10).

3. A method according to claim 1 or claim 2, **characterised in that** nickel or a nickel alloy is used as the second metal on the connection face (11) of the first component (10).

4. A method according to any one of the preceding claims, **characterised in that** aluminium, an aluminium alloy or copper is used as the third metal of the second component (20).

5. A method according to any one of the preceding claims, **characterised in that** steel or a nickel alloy is used as the fourth metal of the welding aid (22) of the second component (20).

6. A method according to any one of claims 1 to 5, **characterised in that** the solder layer (30) is formed from a solder having a melting point between about 210° and 230°C.

7. A method according to claim 6, **characterised in that** a tin-containing solder is used as the solder.

8. A method according to any one of claims 1 to 5, **characterised in that** the solder layer (30) is formed from a solder having a melting point between about 800° and 900°C.

9. A method according to claim 8, **characterised in that** a silver-containing solder or a solder based on aluminium is used as the solder.

10. A method according to any one of claims 1 to 5, **characterised in that** the solder layer (30) is formed from a solder having a melting point of about 1000°C.

11. A method according to claim 10, **characterised in that** a solder based on copper or nickel is used as the solder.

12. A method according to any one of the preceding claims, **characterised in that** the solder is applied by painting, spraying or printing onto the connection face (11, 23) of the first and/or second component (10, 20).

13. A method according to any one of the preceding claims, **characterised in that** the solder layer (30) is applied in a thickness of less than 10 µm to the connection face (11, 23) of the first and/or second component (10, 20).

14. A method according to any one of the preceding claims, **characterised in that** the solder layer (30) comprises a layer sequence of a plurality of solder layers, which are applied consecutively to the connection face (11, 23) of the first and/or second component (10, 20).

15. An arrangement consisting of a first and a second component (10, 20) connected to one another by means of a laser weld connection, wherein the first component (10) comprises a connection face (11) made of a first metal in the region of the connection to be produced, wherein at least the connection face (11) of the first component (10) is provided with a metal layer (14) made of a second metal, wherein the second component (20) has a body (21) made of a third metal, on which a welding aid (22) made of a fourth metal with a connection face (23) is applied in the region of the connection to be produced, wherein a corrosion-resistant solder layer is provided on one of the connection faces, wherein the laser weld connection is produced by a method according to any one of the preceding claims, in such a way that by melting the solder of the solder layer, a gap being produced by the welding between the first and the fourth metal and the welding zone is filled.

16. An arrangement according to claim 15, **characterised in that** the first component (10) is a storage cell for a storage module, especially of a motor vehicle, the connection face (11) of which is formed by a connection terminal made of steel or an iron alloy, and the second component (20) is a cell connector made of aluminium, an aluminium alloy or copper with a welding aid (22) made of steel or a nickel alloy, by means of which the connection terminals of two storage cells of different polarity are electrically and mechanically connected to one another.

17. An arrangement according to claim 15 or claim 16, **characterised in that** it comprises elements of a solder in the welding zone.

## Revendications

1. Procédé d'assemblage par soudage laser de deux éléments (10, 20) comprenant les étapes consistant à :
- préparer un premier élément (10) qui comprend dans la zone de l'assemblage à obtenir une surface de liaison (11) en un premier métal,
au moins la surface de liaison (11) du premier élément (10) étant équipée d'une couche métallique (14) en un second métal,
- préparer un second élément (20) ayant un corps (21) en un troisième métal, sur lequel est appliqué, dans la zone de l'assemblage à obtenir, un auxiliaire de soudage (22) en un quatrième métal, ayant une surface de liaison (23),
- prévoir une couche de brasure (30) résistant à la corrosion sur la surface de liaison du premier et/ou du second élément (10, 20), cette brasure présentant une température de fusion qui est inférieure à la température apparaissant dans la zone de soudage des éléments (10, 20) à souder,
- mise en contact plan du premier et du second éléments (10, 20) dans la zone des surfaces de liaison, et
- exécution de l'assemblage par soudage laser par fusion de la brasure de la couche de brasure (30) qui remplit une fente produite par le soudage entre le premier métal et le quatrième métal et la zone de soudage.

2. Procédé conforme à la revendication 1, **caractérisé en ce que** l'on utilise, en tant que premier métal du premier élément (10) de l'acier ou un alliage de fer.

3. Procédé conforme à la revendication 1 ou 2, **caractérisé en ce que** l'on utilise en tant que second métal, sur la surface de liaison (11) du premier élément (10) du nickel ou un alliage de nickel.

4. Procédé conforme à une des revendications précédentes, **caractérisé en ce que** l'on utilise en tant que troisième métal du second élément (20) de l'aluminium, un alliage d'aluminium ou du cuivre.

5. Procédé conforme à l'une des revendications précédentes, **caractérisé en ce que** l'on utilise en tant que quatrième métal de l'auxiliaire de soudage (22) du second élément (20) de l'acier ou un alliage de nickel.

6. Procédé conforme à l'une des revendications 1 à 5, **caractérisé en ce que** la couche de brasure (30) est formée d'une brasure qui présente un point de fusion situé entre environ 210° et 230° C.

7. Procédé conforme à la revendication 6, **caractérisé en ce que** l'on utilise en tant que brasure une brasure contenant de l'étain.

8. Procédé conforme à l'une des revendications 1 à 5, **caractérisé en ce que** la couche de brasure (30) est formée d'une brasure qui présente un point de fusion compris entre environ 800°C et 900°C.

9. Procédé conforme à la revendication 8, **caractérisé en ce que** l'on utilise en tant que brasure une brasure renfermant de l'argent ou une brasure à base d'aluminium.

10. Procédé conforme à l'une des revendications 1 à 5, **caractérisé en ce que** la couche de brasure (30) est formée d'une brasure qui présente un point de fusion d'environ 1000°C.

11. Procédé conforme à la revendication 10, **caractérisé en ce que** l'on utilise en tant que brasure une brasure à base de cuivre ou de nickel.

12. Procédé conforme à l'une des revendications précédentes, **caractérisé en ce que** la brasure est appliquée sur la surface de liaison (11, 23) du premier et/ou du second élément (10, 20) par peinture, pulvérisation ou impression.

13. Procédé conforme à l'une des revendications précédentes, **caractérisé en ce que** la couche de brasure (30) est appliquée sur la surface de liaison (11, 23) du premier et/ou du second élément (10, 20) sur une épaisseur de moins de 10 µm.

14. Procédé conforme à une des revendications précédentes, **caractérisé en ce que** la couche de brasure (30) comprend une succession de couches comportant plusieurs couches de brasure qui sont successivement appliquées sur la surface de liaison (11, 23) du premier et/ou du second élément (10, 20).

15. Dispositif constitué d'un premier et d'un second éléments (10, 20) assemblés par soudage laser dans lequel le premier élément (10) comprend dans la zone de l'assemblage à obtenir une surface de liaison (11) en un premier métal, au moins la surface de liaison (11) du premier élément (10) étant équipée d'une couche métallique (14) en un second métal, le second élément (20) comprend un corps (21) en un troisième métal sur lequel est appliqué, dans la zone de l'assemblage à obtenir un auxiliaire de soudage (22) en un quatrième métal ayant une surface de liaison (23), une couche de brasure résistante à la corrosion étant prévue sur l'une des surfaces de liaison, l'assemblage par soudage laser étant obtenu par la mise en oeuvre d'un procédé conforme à l'une des revendications précédentes de sorte que suite à la fusion de la brasure de la couche de brasure, une fente produite par le soudage entre le premier métal et le quatrième métal et la zone de soudage soit remplie.

16. Dispositif conforme à la revendication 15, **caractérisé en ce que** le premier élément (10) est une cellule d'accumulation d'un module d'accumulation en particulier d'un véhicule dont la surface de liaison (11) est formée par une borne de connexion en acier ou en un alliage de fer et le second élément (20) est un élément de connexion de cellules en aluminium en alliage d'aluminium ou en cuivre ayant un auxiliaire de soudage (22) en acier ou en un alliage de nickel par l'intermédiaire duquel les bornes de connexion des deux cellules d'accumulation de différente polarité sont reliées électriquement et mécaniquement.

17. Dispositif conforme à la revendication 15 ou 16, **caractérisé en ce qu'**il comprend des éléments d'une brasure dans la zone de soudage.
